# EUROPÄISCHE PATENTSCHRIFT

(11) **EP 1 431 557 B1**
(45) Veröffentlichungstag und Bekanntmachung des Hinweises auf die Patenterteilung: **24.03.2010**
(21) Anmeldenummer: 03029027.4
(22) Anmeldetag: 16.12.2003
(51) Int. Cl.: F02D 41/34, F02D 41/00

(54) **Verfahren zur Zylindergleichstellung**
Method for equalising cylinder output
Procédé d'équilibrage des cylindres

(30) Priorität: 20.12.2002 DE 10259846
(43) Veröffentlichungstag der Anmeldung: 23.06.2004
(73) Patentinhaber: Bayerische Motoren Werke Aktiengesellschaft, 80809 München (DE)
(72) Erfinder: Konrad, Heiko, Dr., 82065 Baierbrunn (DE); Krämer, Gerd, 82065 Baierbrunn (DE)

(56) Entgegenhaltungen:
- EP-A- 1 229 230
- DE-A1- 10 156 409
- US-A- 5 377 654

## Beschreibung

Die Erfindung betrifft ein Verfahren zur Zylindergleichstellung bei Brennkraftmaschinen mittels eines elektronischen Steuergeräts nach dem Oberbegriff des Patentanspruchs 1. Unter dem Begriff Zylindergleichstellung wird die Gleichstellung der in den einzelnen Zylindern erzeugten (zylinderindividuellen) Einzelmomente verstanden.

Maßnahmen zur Zylindergleichstellung sind beispielsweise in der DE 3620775 A1, der DE 3633671A1 und der deutschen Patentanmeldung DE10156409 (nicht vorveröffentlicht) beschrieben. Bei den allgemein und intern bekannten Maßnahmen zur Zylindergleichstellung sind ungenügende Erfolge im Zusammenhang mit Brennkraftmaschinen der eingangs genannten Art festgestellt worden.

Aus der EP-A-1 229 230 ist ein Verfahren zur Zylindergleichstellung bekannt, bei dem eine Zylindergleichstellung zuerst im gedrosselten Betrieb durch zylinderindividuelle Korrektur der Kraftstoffeinspritzmengen und anschließend im entdrosselten Betrieb durch Korrektur der angesaugten Luftmassen vorgenommen wird.

Es ist Aufgabe der Erfindung, ein Verfahren zur Zylindergleichstellung bei Brennkraftmaschinen, bei denen die Laststeuerung sowohl über eine Drosselklappe als auch über eine variable Lastwechselventilverstellung erfolgt, zu verbessern.

Diese Aufgabe wird durch die Merkmale des Patentanspruchs 1 gelöst. Vorteilhafte Weiterbildungen der Erfindung sind die Gegenstände der abhängigen Patentansprüche. Dabei liegen der Erfindung folgende Überlegungen zugrunde:

Brennkraftmaschinen der eingangs genannten Bauart können bezüglich der Laststeuerung, d.h. bzgl. der Einstellung der in die Zylinder einfließenden Luftmasse, in verschiedenen Betriebsarten betrieben werden:

Wird die Last vorwiegend über eine Variation der Lastwechselventile eingestellt, während der Unterdruck im Sammler gleich Null oder nahezu gleich Null ist, so befindet sich die Brennkraftmaschine in sog. *entdrosselten Betriebszustand.* Ein geringfügiger Unterdruck im Sammler wird hierbei ggf. über die Drosselklappe eingestellt. Dabei sind die Lastwechselventile verallgemeinert Laststeuerorgane, die sich auf alle Zylinder unterschiedlich auswirken können, im ff. auch zylinderindividuelle Laststeuerorgane genannt.

Wird die Last andernfalls vorwiegend über einen Unterdruck im Sammler mit Hilfe einer Drosselklappe gesteuert, so befindet sich die Brennkraftmaschine im sog. *gedrosselten Betriebszustand*. Variationen der Lastwechselventile haben hier keinen wesentlichen Einfluss auf die eingestellte Last. Dabei ist die Drosselklappe verallgemeinert ein Laststeuerorgan, das sich auf alle Zylinder gleich auswirkt, im ff. auch zylinderübergreifendes Laststeuerorgan genannt.

Bei Motoren der o.g. Bauart werden die verschiedenen Betriebsarten (gedrosselt und entdrosselt) abhängig von der Betriebssituation des Motors eingestellt. Im Normalfall erfolgt ein ungedrosselter Betrieb, da hier das Verbrauchspotenzial der drosselfreien Laststeuerung realisiert wird und ein sehr gutes Ansprechverhalten erreicht wird.

Der gedrosselte Betrieb wird dagegen in der Regel in Notlaufsituationen angefahren oder, um bewusst einen schlechten Motorwirkungsgrad zu provozieren, etwa bei max. Heizleistungsanforderungen des Fahrers.

Allgemeine Ursachen für die Ungleichverteilung der zylinderindividuellen Gemischverhältnisse und/oder Einzelmomente bei Brennkraftmaschinen:

Unabhängig vom Laststeuerungsprinzip kann es bei mehrzylindrigen Brennkraftmaschinen dazu kommen, dass die in den einzelnen Zylindern vorliegenden Luft-/Kraftstoff-Gemischverhältnisse und die von den Zylindern erzeugten Anteile am Kurbelwellendrehmoment (also die zylinderindividuellen Einzelmomente) verschieden sind. Ungleiche Anteile der Zylinder am Kurbelwellendrehmoment führen zu einer schlechten Laufruhe des Motors. Ursachen für die Ungleichheit der Gemischverhältnisse und/oder Einzelmomente zwischen den Zylindern sind meist Fertigungstoleranzen in den luft- und kraftstoffbestimmenden Parametern. Unterschiede in den zylinderindividuellen Gemischverhältnissen (im ff. kurz Gemischunterschiede genannt) resultieren aus
- Abweichungen in den real zugemessenen Kraftstoffmengen und/oder
- Abweichungen in den real zugemessenen Luftmassen.

Die zylinderindividuellen Gemischunterschiede führen auch unmittelbar zu unterschiedlichen Einzelmomentanteilen. Die Einzelmomente werden zusätzlich noch bestimmt durch:
- Abweichungen zwischen den Zündzeitpunkten bezogen auf den Zünd-OT
- Abweichungen in den jeweiligen Zündenergien der Zündkerzen der einzelnen Zylinder.

Liegen keine Abweichungen bzgl. Zündzeitpunkt und Zündenergie vor, so werden die Einzelmomentunterschiede also allein durch Gemischunterschiede bzw. durch Luftmassen- und/oder Kraftstoffmengenunterschiede bestimmt.

### Zylinderungleichverteilung bei gedrosselt betriebenen Motoren:

Da bei gedrosselten Motoren praktisch keine Luftmassenunterschiede zwischen den Zylindern existieren, sind Gemischunterschiede hier ausschließlich auf Kraftstoffmengenunterschiede zurückzuführen. Ursachen für unterschiedliche Kraftstoffmengen sind z.B. Toleranzen in den Einspritzventilen. Bei gleicher Luftmasse in einem Zylinder führt eine zu geringe Kraftstoffmenge unmittelbar zu einer Einzelmomentreduzierung und umgekehrt.

### Verfahren zur Zylindergleichstellung bei gedrosselt betriebenen Motoren:

Unter Ausnutzung des direkten Zusammenhangs zwischen der Laufruhe und der zylinderindividuellen Gemischverhältnisse basieren bekannte Verfahren zur Gleichstellung von zylinderindividuellen Einzelmomenten von gedrosselten Motoren entweder auf gemessenen Lambdawerte der einzelnen Zylinder oder auf zylinderindividuellen Laufruhesignalen. Durch eine Korrektur der zylinderindividuell abgegebenen Kraftstoffmengen werden gleichzeitig die Laufruhe optimiert und die Gemischverhältnisses bzw. die Einzelmomente gleichgestellt.

(Beispiele: DE 3620775 A1, DE 3633671A1)

### Zylinderungleichverteilung bei entdrosselt betriebenen Motoren mit variabler Ventilverstellung:

Bei entdrosselt betriebenen Motoren mit variabler Ventilverstellung können Gemischunterschiede und Laufunruhe bei gleichen Zündparametern nicht allein auf Kraftstoffunterschiede sondern zusätzlich auch auf unterschiedliche zugemessene Luftmassen zurückgeführt werden. Grund für die Luftmassenunterschiede sind z.B. Fertigungstoleranzen in der Ventilsteuerung.

Bei entdrosselt betriebenen Brennkraftmaschinen ist damit die Ursache für eine schlechte Laufruhe und für Gemischunterschiede bzw. für Unterschiede in den Einzelmomenten somit allein durch Messung der Gemischunterschiede oder der Laufruhe der einzelnen Zylinder nicht eindeutig lokalisierbar.

### Verfahren zur Zylindergleichstellung bei entdrosselt betriebenen Motoren mit variabler Ventilverstellung:

Eine Maßnahme zur Zylindergleichstellung von entdrosselt betriebenen Motoren mit variabler Ventilverstellung ist beispielsweise in der nicht vorveröffentlichen Patentanmeldung DE 10156409 beschrieben. In dem dort beschriebenen Verfahren wird davon ausgegangen, dass die Zylinderungleichverteilung aus einer Luftmassenungleichverteilung resultiert. Zur Gleichstellung der Luftmassen erfolgt eine globale Ventilhubanhebung der Einlassventile aller Zylinder verbunden mit einer Erhöhung des Unterdrucks im Sammler. Die Erkennung der Laufunruhe erfolgt über Messung der zylinderindividuellen Laufunruhewerte und Bildung eines Laufruhe-Istwertes. Hierbei werden also zur Zylindergleichstellung von entdrosselten Zylindern durch Ventilhubanhebung plus Androsselung nur ungleiche Luftmassen berücksichtigt. Nicht berücksichtigt wird die Möglichkeit, dass ungleiche Zylindermomente auch aus ungleichen Kraftstoffmengen resultieren können. Die Folge ist gegebenenfalls ein unnötiges Androsseln der Brennkraftmaschine ohne signifikante Verbesserungen.

Bei der vorliegenden Erfindung handelt es sich um ein verbessertes Verfahren zur Zylindergleichstellung bei Brennkraftmaschinen, die sowohl gedrosselt (also Laststeuerung vorwiegend mittels zylinderübergreifendem Laststeuerorgan) als auch entdrosselt (also Laststeuerung vorwiegend mittels zylinderindividuellen Laststeuerorganen) betrieben werden können.

### Erfindungsgemäß wird daher

- in einem ersten Schritt bei Vorliegen des gedrosselten Betriebs eine Zylindergleichstellung durch zylinderindividuelle Korrektur der Kraftstoffeinspritzmengen vorgenommen, wobei unter der Annahme gleicher zylinderindividueller Luftmassen zylinderindividuelle Kraftstoffmengenadaptionswerte berechnet und gespeichert werden, und
- in einem zweiten Schritt bei nachfolgendem Vorliegen des entdrosselten Betriebs eine Zylindergleichstellung durch Korrektur der angesaugten Luftmassen vorgenommen, wobei mittels der Kraftstoffmengenadaptionswerte korrigierte zylinderindividuelle Kraftstoffeinspritzmengen zugemessen werden und wobei unter der Annahme nun gleicher zylinderindividueller Kraftstoffeinspritzmengen Luftmassenadaptionswerte berechnet und gespeichert werden.

Vorzugsweise wird das erfindungsgemäße Verfahren nur dann durchgeführt, wenn keine zylinderindividuellen Abweichungen bzgl. Zündzeitpunkt und Zündenergie vorliegen.

Zur näheren Erläuterung der Erfindung: Da im ungedrosselten Betriebszustand die Ursache für eine schlechte Laufruhe nicht eindeutig lokalisierbar ist, finden also erfindungsgemäß abhängig vom Betriebszustand der Brennkraftmaschine unterschiedliche Adaptionen statt:
1. in gedrosselten Betriebsphasen werden die zylinderindividuell zugemessenen Kraftstoffmengen gleichgestellt, indem die jeweils ausgegebenen Einspritzmengen korrigiert werden. Hintergrund ist, dass hier Unterschiede in den Zylindereinzelmomenten nur aus unterschiedlichen eingespritzten Kraftstoffmengen resultieren können. Somit ist durch entsprechende Korrekturen der Kraftstoffmengen eine Gemisch- und Momentengleichstellung möglich. Fertigungstoleranzen in den Einspritzventilen werden dadurch ausgeglichen.
   Für jeden Zylinder werden Adaptionswerte fortlaufend berechnet und gespeichert, wobei die Abspeicherung ggf. betriebspunktabhängig erfolgt.
   Basis für die Berechnung der Kraftstoffmengenadaptionswerte können entweder zylinderindividuelle Lambda- oder Laufruhewerte sein.
2. in ungedrosselten Betriebsphasen werden die zylinderindividuell angesaugten Luftmassen gleichgestellt, wobei die Kraftstoffmengenadaptionswerte, die in den gedrosselten Betriebsphasen bestimmt werden, übernommen und nicht weiter verändert werden. Hintergrund ist hier, dass Unterschiede in den Zylindereinzelmomenten und im Gemisch, nachdem die Kraftstoffmengen bereits gleichgestellt wurden, nur noch aus unterschiedlichen Luftmassen resultieren können. Somit ist durch entsprechende Korrekturen der Luftmassen eine Gemisch- und Momentengleichstellung möglich. Fertigungstoleranzen in der Ventilsteuerung werden somit ausgeglichen.
   Basis für die Berechnung der Kraftstoffmengenadaptionswerte können entweder zylinderindividuelle Lambda- oder Laufruhewerte sein.
   Können die zylinderindividuellen Laststeuerorgane nur gemeinsam verstellt werden (z.B. über eine gemeinsame Exzenterwelle bei Valvetronic-Motoren zur globalen Einstellung der Ventilsteuerung), so werden Luftmassenadaptionswerte in Form von Werten bzw. in Form jeweils eines auf die gemeinsame Verstelleinrichtung bezogenen Wertes zur Angleichung (insbesondere zur (gemeinsamen) Erhöhung) der zugemessenen Volumenströmen über die zylinderindividuellen Laststeuerorgane und in Form von Werten bzw. jeweils eines Wertes zur gleichzeitigen bedarfsweisen Korrektur (insbesondere zur gleichzeitigen Reduzierung) der zugemessenen Luftdichte über das zylinderübergreifende Laststeuerorgan gebildet, um die einzelnen Luftmassen gleichzustellen (beim Beispiel der Valvetronic-Motoren insbesondere durch globale Ventilhubanhebung der Lastwechselventile bei gleichzeitiger Androsselung mittels der Drosselklappe).
   Basis für die Berechnung der Luftmassenadaptionswerte können wieder zylinderindividuelle Lambda- oder Laufruhewerte sein, durch die die Ungleichheit der Zylinder-Einzelmomente erfassbar ist.
   Die Bestimmung der Kraftstoffmengen- bzw. der Luftmassenadaptionswerte kann z.B. mittels eines oder mehrerer Regler erfolgen.

In der Zeichnung ist ein Ausführungsbeispiel der Erfindung dargestellt. Es zeigen
Fig. 1 eine schematische Darstellung einer Brennkraftmaschine, die über Lastwechselventile mit einer Einrichtung zur globalen Verstellung des Ventilhubes über alle Zylinder hinweg als zylinderindividuelle Laststeuerorgane, eine Drosselklappe als zylinderübergreifendes Laststeuerorgan und über zylinderindividuell ansteuerbare Einspritzventile verfügt und
Fig. 2 einen möglichen Ablaufplan des erfindungsgemäßen Verfahrens, das als Programm im Motorsteuergerät abgelegt ist und von diesem durchgeführt wird.

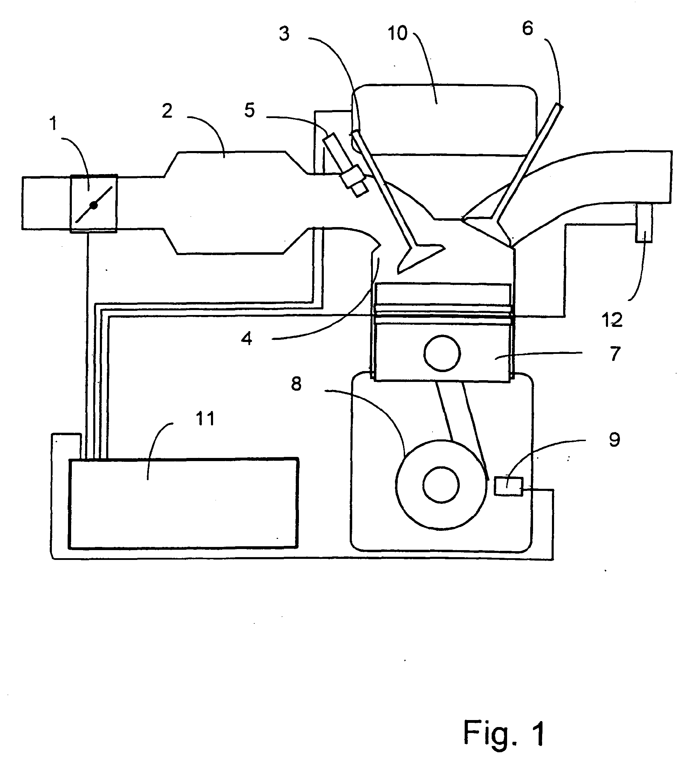

In Fig. 1 ist schematisch eine Brennkraftmaschine dargestellt, in deren Ansaugtrakt eine Drosselklappe 1 als zylinderübergreifendes Laststeuerorgan angeordnet ist. Die angesaugte Luftmasse gelangt über einen Sammler 2 und über die Einlassventile 3 in die Zylinder 4. Die Kraftstoffmengen werden über die Einspritzventile 5 in die Zylinder 4 eingebracht. Nach einer Verbrennung wird das Abgas über die Auslassventile 6 ausgestoßen. Ergänzend sind noch der Kolben 7 in einem Zylinder, die Kurbelwelle 8, der Kurbelwellengeber 9 zur Erfassung der Brennkraftmaschinendrehzahl und der Laufruhe sowie eine Lambda-Sonde 12 zur Erfassung der Abgaszusammensetzung lediglich schematisch angedeutet. Die Einlassventile 3 und ggf. auch die Auslassventile 6 als zylinderindividuelle Laststeuerorgane sind hier mit einer gemeinsamen Verstelleinrichtung 10, z. B. in Form einer Exzenterwelle im Zusammenhang mit einer variablen Ventilsteuerung, zur Änderung der Ventilhübe wirkverbunden. Die Verstelleinrichtung 10 und die Drosselklappe 1 sind über ein elektronisches Motorsteuergerät 11 ansteuerbar. Das elektronische Motorsteuergerät 11 erhält Eingangssignale, wie z.B. die Signale des Kurbelwellengebers 9 und der Lambda-Sonde 12.

Das in Fig. 1 dargestellte elektronische Motor-Steuerungsgerät legt betriebespunktabhängig fest, ob die Brennkraftmaschine entdrosselt oder gedrosselt betrieben werden soll und bestimmt abhängig vom Betriebszustand die Steuerdaten für die Drosselklappe 1, die Verstelleinrichtung 10 und die Einspritzventile 5. Die Gemischzusammensetzung wird über die Lambda-sonde12 erfasst. Die Laufruhe wird mittels des Kurbelwellengebers 9 aufgenommen, indem die Zeiten für das Überstreichen von vorgegebenen Winkelsegmenten der Kurbelwelle gemessen und miteinander verglichen werden.

Im Hinblick auf die Einrichtung zur Verstellung des Ventilhubes nehmen Toleranzen innerhalb der Hubventile mit zunehmenden Hubwerten ab.

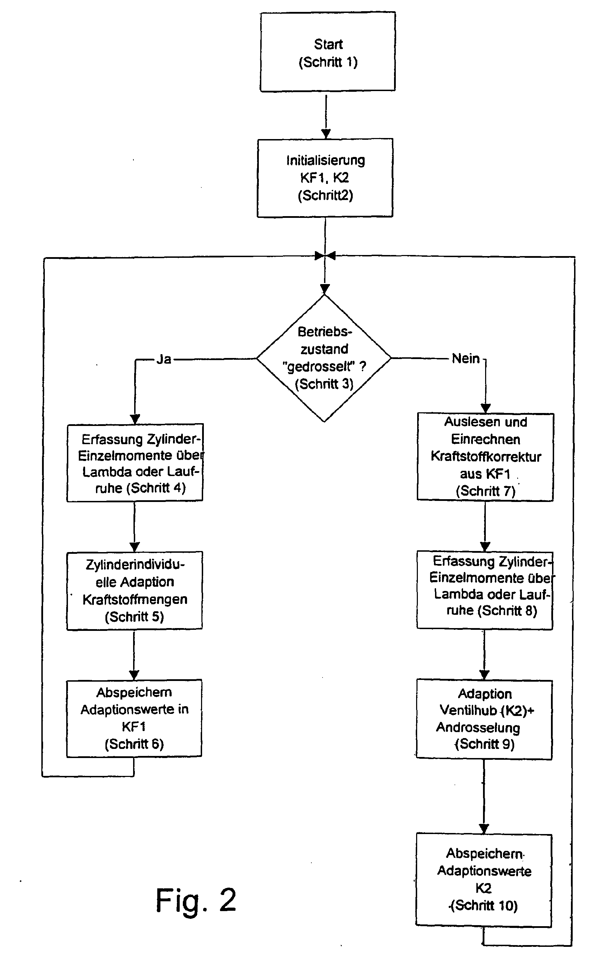

Im Ablaufplan gemäß Fig. 2 werden nach Start der Brennkraftmaschine (Schritt 1) zunächst die Kraftstoffadaptionswerte und die Luftmassenadaptionswerte mit Adaptionswerten aus vorangegangenen Betriebsphasen initialisiert (Schritt 2). Die Kraftstoffadaptionswerte werden zylinderindividuell in Form eines Korrekturkennfeldes KF1 abgelegt. Die Luftmassenadaptionswerte werden in Form eines Korrekturwertes K2 für die gemeinsame Verstellung der Ventilhübe der Einlassventile 3 abgelegt. Hierbei wird berücksichtigt, dass im Hinblick auf die Einrichtung zur Verstellung des Ventilhubes die Einflüsse von Toleranzen innerhalb der Hubventile mit zunehmenden Hubwerten abnehmen. Das durch die Ventilhubanhebung vermehrte Luftvolumen muss durch eine Androsselung wieder kompensiert werden. (Würden die zylinderindividuellen Laststeuerorgane auch zylinderindividuell und nicht gemeinsam verstellt werden können (z. B. bei EVT-Systemen; hier nicht dargestellt) würden die Luftmassenadaptionswerte wie die Kraftstoffadaptionswerte ebenfalls in Form eines Korrekturkennfeldes abgelegt werden.)

Es folgt eine Abfrage des aktuellen Betriebszustandes (Schritt 3).

Liegen noch keine Kraftstoffmengenadaptionswerte vor, da ein gedrosselter Betriebszustand noch nicht aufgetreten ist, könnte mit einer erstmaligen Ermittlung der Luftmassenadaptionswerte abgewartet werden, bis zum ersten Mal ein gedrosselter Betriebszustand vorliegt; alternativ könnte auch mit einer Vorbelegung von KF1 mit neutralen Werten gestartet werden, wobei sich in diesem Fall nur ein suboptimales Ergebnis einstellen würde (beide Fälle sind hier nicht im Ablaufplan eingezeichnet).

Befindet sich die BKM im gedrosselten Betriebszustand, so wird im folgenden eine Gleichstellung der Kraftstoffmengen durchgeführt (Schritt 4-6).

Befindet sich die BKM im entdrosselten Betriebszustand, so wird im folgenden eine Gleichstellung der Luftmassen durchgeführt (Schritt 7-10), wobei die Kraftstoffmengenadaptionswerte aus der Gleichstellung der Kraftstoffmengen im vorangegangenen gedrosselten Betrieb verwendet werden. Dies ist der Kern der erfindungsgemäßen Verfahrens.

Liegt also zunächst gedrosselter Betrieb vor, so erfolgt eine Erfassung der Einzel-Momente mittels mit der Lambda-Sonde 12 gemessenen Einzel-Lambdawerte oder über die mit dem Kurbelwellengeber 9 gemessene Laufruhe (Schritt 4). Auf Basis der Ungleichheit der zylinderindividuellen Einzelmomente werden die zylinderindividuellen Kraftstoffmengenadaptionswerte bestimmt (Schritt 5). Die Adaptionswerte werden dann betriebspunktabhängig im Kennfeld KF1 abgelegt (Schritt 6). Anschließend erfolgt ein Rücksprung zur Abfrage des Betriebszustandes (Schritt 3).

Wird entdrosselter Betrieb erkannt, so werden die im Kennfeld KF1 abgelegten Kraftstoffmengenadaptionswerte stets bei der Ermittlung der einzuspritzenden zylinderindividuellen Gesamtkraftstoffmenge eingerechnet (Schritt 7). Anschließend werden die Zylindereinzelmomente, z.B. über die Laufunruhe mittels des Kurbelwellengebers 9 oder über die Gemischungleichverteilung mittels der Lambda-Sonde 12 (vgl. Fig.1) gemessen (Schritt 8). Diese Ungleichheit der Zylinder-Einzelmomente kann, da die Kraftstoffkorrekturwerte bereits eingerechnet sind, nur noch aus einer Ungleichverteilung der Luftmassen resultieren und somit am besten durch eine Gleichstellung der Luftmassen korrigiert werden. Ist der Wert der Laufruhe schlechter als ein vorgegebener Sollwert, so wird daher der Ventilhub mittels der Verstellvorrichtung 10 (vgl. Fig.1) (daraus folgt jeweils ein Luftmassenadaptionswert bzw. der Korrekturwert K2) bei gleichzeitiger Androsselung über die Drosselklappe 1 solange erhöht, bis die gewünschte Laufruhe oder bis ein vorgegebener Endwert für die Ventilhubanhebung erreicht ist (Schritt 9). Die aktuellen Korrekturwerte K2 werden anschließend im Motorsteuergerät 11 gespeichert (Schritt 10). Anschließend erfolgt wieder ein Rücksprung zur Abfrage des Betriebszustandes (Schritt 3).

### Vorteile der Erfindung

1. Verbesserung der Laufruhe
2. Emissionsverbessung
3. Komfortgewinn und niedrigere Bauteilbelastung durch geringere Vibrationen im Fahrzeug
4. Ausgleich von Toleranzen in der Einlassventil-Verstellung
5. Ausgleich von Toleranzen in der Kraftstoffzumessung.

## Patentansprüche

1. Verfahren zur Zylindergleichstellung bei Brennkraftmaschinen mittels eines elektronischen Steuergeräts, durch das die Brennkraftmaschine in einen entdrosselten Betrieb, bei dem die Laststeuerung vorwiegend über zylinderindividuelle Laststeuerorgane erfolgt, und in einen gedrosselten Betrieb, bei dem die Laststeuerung vorwiegend über ein zylinderübergreifendes Laststeuerorgan erfolgt, versetzt werden kann, wobei in einem ersten Schritt bei Vorliegen des gedrosselten Betriebs eine Zylindergleichstellung durch zylinderindividuelle Korrektur der Kraftstoffeinspritzmengen vorgenommen wird, wobei unter der Annahme gleicher zylinderindividueller Luftmassen zylinderindividuelle Kraftstoffmengenadaptionswerte (KF1) berechnet und gespeichert werden, wobei in einem zweiten Schritt bei nachfolgendem Vorliegen des entdrosselten Betriebs eine Zylindergleichstellung durch Korrektur der angesaugten Luftmassen vorgenommen wird, wobei mittels der Kraftstoffmengenadaptionswerte korrigierte zylinderindividuelle Kraftstoffeinspritzmengen zugemessen werden, wobei unter der Annahme nun gleicher zylinderindividueller Kraftstoffeinspritzmengen Luftmassenadaptionswerte berechnet und gespeichert werden, und wobei Luftmassenadaptionswerte Werte (K2) zur Angleichung der zugemessenen Luftvolumenströme sind, **dadurch gekennzeichnet, dass** die Luftmassenadaptionswerte in Form eines Korrekturwertes für die gemeinsame Verstellung der Ventilhübe der Einlassventile abgelegt werden, wobei gleichzeitig eine bedarfsweise Korrektur der Luftdichte über das zylinderübergreifende Laststeuerorgan erfolgt.

2. Verfahren nach einem der vorangegangenen Patentansprüche, **dadurch gekennzeichnet, dass** als Basis für die Berechnung der Kraftstoffmengenadaptionswerte im gedrosselten Betrieb zylinderindividuelle Lambda- oder Laufruhewerte verwendet werden.

3. Verfahren nach einem der vorangegangenen Patentansprüche, **dadurch gekennzeichnet, dass** als Basis für die Berechnung der Luftmassenadaptionswerte im entdrosselten Betrieb zylinderindividuelle Lambda- oder Laufruhewerte verwendet werden.

## Claims

1. A method for cylinder equalisation in internal combustion engines by means of an electronic controller, by means of which the internal combustion engine can be put into dethrottled operation, in which the load control predominately takes place by means of individual cylinder load control members, and into throttled operation, in which the load control predominately takes place by means of a cylinder-overlapping load control member, wherein, in a first step, when throttled operation is present, a cylinder equalisation is carried out by individual cylinder correction of the fuel injection quantities, individual cylinder fuel quantity adaptation values (KF1) being calculated and stored under the assumption of the same individual cylinder air masses, wherein, in a second step, with dethrottled operation subsequently being present, a cylinder equalisation is carried out by correcting the air masses taken in, corrected individual cylinder fuel injection quantities being allocated by means of the fuel quantity adaptation values, wherein air mass adaptation values are calculated and stored under the assumption of individual cylinder fuel injection quantities now being the same, and wherein air mass adaptation values are values (K2) to equalise the allocated air volume flows, **characterised in that** the air mass adaptation values are stored in the form of a correction value for the common adjustment of the valve lifts of the inlet valves, wherein a correction of the air density takes place simultaneously by means of the cylinder-overlapping load control member as necessary.

2. A method according to any one of the preceding claims, **characterised in that** individual cylinder lambda or running smoothness values are used as a basis for the calculation of the fuel quantity adaptation values during throttled operation.

3. A method according to any one of the preceding claims, **characterised in that** individual cylinder lambda or running smoothness values are used as a basis to calculate the air mass adaptation values in dethrottled operation.

## Revendications

1. Procédé d'équilibrage des cylindres d'un moteur à combustion par un appareil de commande électronique mettant le moteur à combustion en un mode de fonctionnement non étranglé dans lequel la commande de charge se fait principalement par des organes de commande de charge individuels par cylindre et en mode de fonctionnement étranglé dans lequel la commande de charge se fait principalement par un organe de commande principal de charge de cylindre,
selon lequel
- dans une première étape, dans le mode de fonctionnement étranglé, on équilibre les cylindres par une correction individuelle par cylindre, des doses de carburant injectées, en admettant que les masses d'air individuelles par cylindre sont identiques, on calcule des valeurs d'adaptation de doses de carburant (KF1) individuelles par cylindre et on les mémorise,
- dans une seconde étape, dans le mode de fonctionnement non étranglé qui se présente ensuite, on équilibre les cylindres en corrigeant les masses d'air aspirées, et
à l'aide des valeurs d'adaptation de doses de carburant, on fournit des doses de carburant individuelles, corrigées, et
dans l'hypothèse de doses de carburant injectées, individuelles par cylindre, qui sont alors égales, on calcule des valeurs d'adaptation des masses d'air et on les enregistre en mémoire, et
les valeurs d'adaptation des masses d'air sont des valeurs (K2) pour équilibrer les veines volumiques d'air dosées,
procédé **caractérisé en ce qu'**
on enregistre les valeurs d'adaptation des masses d'air sous la forme d'une valeur de correction pour le réglage commun des courses des soupapes d'admission, et
en même temps, on fait une correction nécessaire le cas échéant de la densité d'air par un organe de commande principal de charge pour les cylindres.

2. Procédé selon la revendication 1,
**caractérisé en ce que**
comme base du calcul des valeurs d'adaptation des quantités de carburant en mode étranglé, on utilise des valeurs du coefficient Lambda ou celles de fonctionnement au ralenti, individuelles par cylindre.

3. Procédé selon l'une des revendications précédentes,
**caractérisé en ce que**
comme base du calcul des valeurs d'adaptation des masses d'air en mode de fonctionnement étranglé, on utilise des valeurs de coefficient Lambda ou celles de fonctionner au ralenti, individuelles par cylindre.
